Europäisches Patentamt

European Patent Office

Office européen des brevets

(19)

(11) Veröffentlichungsnummer: **0 055 837**
**B1**

(12) # EUROPÄISCHE PATENTSCHRIFT

(45) Veröffentlichungstag der Patentschrift:
10.10.84

(51) Int. Cl.³: **B 62 K 21/00**

(21) Anmeldenummer: **81110492.6**

(22) Anmeldetag: **16.12.81**

(54) **Leichtfahrzeug.**

(30) Priorität: **07.01.81 DE 3100185**

(43) Veröffentlichungstag der Anmeldung:
**14.07.82 Patentblatt 82/28**

(45) Bekanntmachung des Hinweises auf die Patenterteilung:
**10.10.84 Patentblatt 84/41**

(84) Benannte Vertragsstaaten:
**BE CH FR GB IT LI NL**

(56) Entgegenhaltungen:
**CH - A - 234 015
DE - A - 3 021 135
DE - C - 40 201
DE - C - 48 353
DE - C - 822 208
FR - A - 857 529
FR - A - 974 108
GB - A - 729 782**

(73) Patentinhaber: **Lucic, Ivo, Krankenhausstrasse 36,
D-7910 Neu-Ulm/Donau (DE)**

(72) Erfinder: **Lucic, Ivo, Krankenhausstrasse 36,
D-7910 Neu-Ulm/Donau (DE)**

## Beschreibung

Die Erfindung betrifft Leichtfahrzeuge mit mindestens einer Sitzfläche und zwei oder mehreren Rädern, deren vorderem Rahmenteil eine Steuersäule nach hinten geneigt und drehbar zugeordnet ist, bei dem im Abstand von der Steuersäule eine, einen Übertragungshebel tragende Lenkachse drehbar gehalten ist, die mit der Steuersäule unter Zwischenschaltung eines Untersetzungsgetriebes in Wirkverbindung steht.

Konstruktion solcher Fahrzeuge ist z. B. durch Patentschrift GB 729 782 bekannt.

Leichtfahrzeuge haben insbesondere hinsichtlich des Rahmens die Grundkonstruktion des Fahrrades, wobei wichtige Teile weit voneinander entfernt sind und miteinander verbunden werden müssen (Halterung des Sattels, Steuersäulenlager, Lenkachsenlager, die Radlager und bzw. das Tretlager). Zur Verbindung dieser Teile ist ein verhältnismäßig großer Material- und Arbeitsaufwand erforderlich. Der Hinterräderantrieb ist wegen des Differentials und der Halbachsen teuerer als der Vorderradantrieb, wiegt mehr, und beansprucht wertvollen Platz zwischen den Hinterrädern. Die Sitzposition der bekannten Leichtfahrzeuge ist unbequem.

Die Aufgabe der Erfindung ist, die Konstruktion von leichten, einfachen und bequemen Fahrzeugen zu ermöglichen.

Das ist vor allem dadurch ermöglicht, daß die Lenkachse im vorderem Rahmenteil angeordnet ist, der unter der Sitzfläche liegt; durch eine drehbewegliche und gleitende Koppelung eines Verbindungsteiles ist eine drehbewegliche zwangsläufige Wirkverbindung des Lenkers mit der Untersetzungsstange mindestens über dem Übertragungshebel hergestellt, wobei die Untersetzungsstange starr in Verbindung mit der Steuersäule liegt, vorzugsweise in einer Ebene geführt wird, die parallel zur Bewegungsebene des den Lenker tragenden Übertragungshebels verläuft.

Wenn der an dem Übertragungshebel befestigte Lenker nach seinem Querauslauf nach links und rechts beidseitig zuerst nach oben gebogen ist, und schräg nach oben und vorn erstreckende Griffteile aufweist, dessen Lenkbewegung um den Fahrer oberhalb seiner Knie verläuft, werden auch wesentliche Vorteile erzielt.

Bei den pedalangetriebenen Leichtfahrzeugen ist vorteilhaft, daß das vordere Rahmenteil zusammen mit dem hinteren Rahmenteil und mit der Steuersäule eine nach unten offene, etwa U-Form bilden, und daß das Tretlager an der Vorderradgabel außerhalb des Umfanges des Vorderrades und hinter dessen Achse angeordnet ist.

Bei den dem Anspruch 1 oder 2 entsprechenden Leichtfahrzeugen mit Motorantrieb ist von Vorteil, daß die Sitzfläche eine Verbindung mit dem drehfesten vorderen Rahmenteil aufweist und über der Lenkachse nach hinten gezogen ist.

Die Steuersäule, die Lenkachse und der Sattel oder die Sitzfläche sind nahe beieinander angeordnet, wodurch die Rahmenvereinfachung gelungen ist, die die Konstruktion der kompakten Leichtfahrzeuge ermöglicht.

Die neue Lenkung deren Lenkachse im vorderen Rahmenteil unter der Sitzfläche angeordnet ist und deren Lenker um etwa 180° um den Fahrer gedreht wird, macht den Antrieb des Vorderrades mit Pedalen möglich, wobei der Abstieg frei ist und der Sattel wegen der Mitbewegung des an der Gabel angeordneten Tretlagers auch mitgelenkt wird (die Beine brauchen immer die gleiche Richtung wie das Tretlager).

Dabei ist wichtig, daß die Wirkung des Lenkers untersetzt ist, wodurch sein Drehweg verlängert wird. Die Verlängerung erfordert eine lange Bewegung der Hände des Fahrers (bei Fahrzeugen ohne Sitzrücklehne, bei Fahrzeugen mit Pedalantrieb und bei Zweiradfahrzeugen dürfen die Hände ihre Greifstellen am Lenker nicht so wechseln wie am Lenker eines PKW). Die notwendige lange Bewegung der Hände ist um den Fahrer herum vorhanden, und dementsprechend ist die Lenkachse angeordnet und der Lenker angeformt. Das macht die Sitzposition bequem.

Das Lenksystem ist auch bei den motorangetriebenen Leichtfahrzeugen vorteilhaft, die insbesondere bei dem Vorderradantrieb eine Untersetzung der Wirkung des Lenkers brauchen.

Beim Vorderradantrieb (ob mit Pedalen oder mit Motor) sind die Herstellungskosten und das Gewicht geringer als bei dem Hinterräderantrieb, da die Halbachsen und der Differential keine Anwendung finden. Dabei ist zwischen den Hinterrädern großer Gepäckraum gewonnen.

Die Leichtfahrzeuge sind somit als Einkaufswagen als Verbindung zwischen Großparkplätzen und Einkaufszentren verwendbar, aber auch für Zeitungsträger und Postträger sowie für ältere und leichtbehinderte Leute praktisch.

Zwei von mehreren mindestens dem Anspruch 1 entsprechenden Ausführungsmöglichkeiten werden auf den Zeichnungen dargestellt.

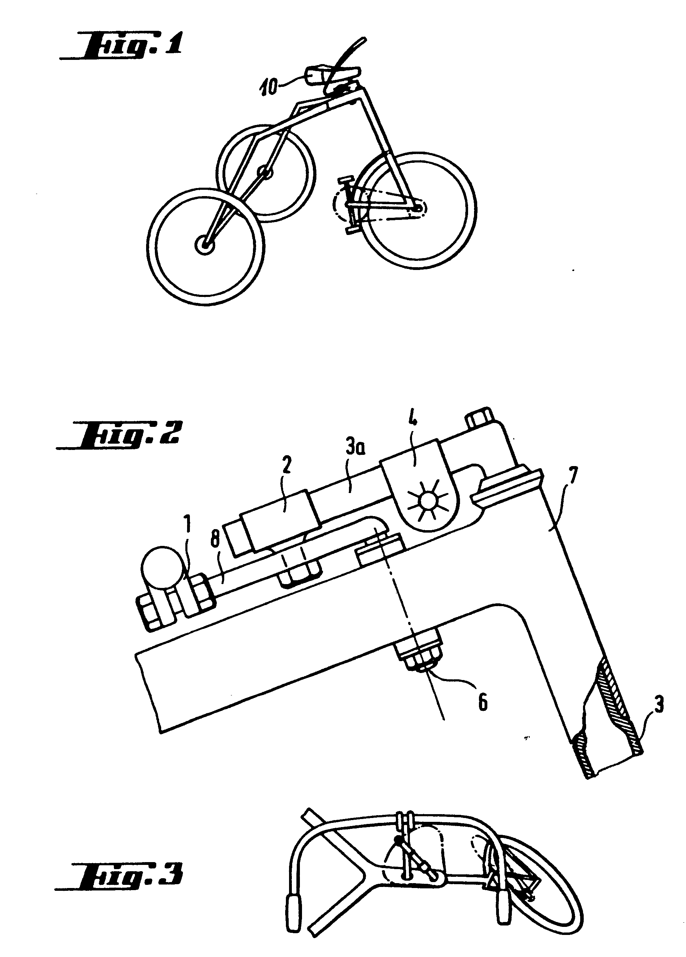

Fig. 1 zeigt ein Dreirad mit Pedalantrieb auf dem Vorderrad.

Fig. 2 zeigt deutlich die Teile der Lenkung des Dreirades.

Fig. 3 verdeutlicht die Funktion seiner Lenkung.

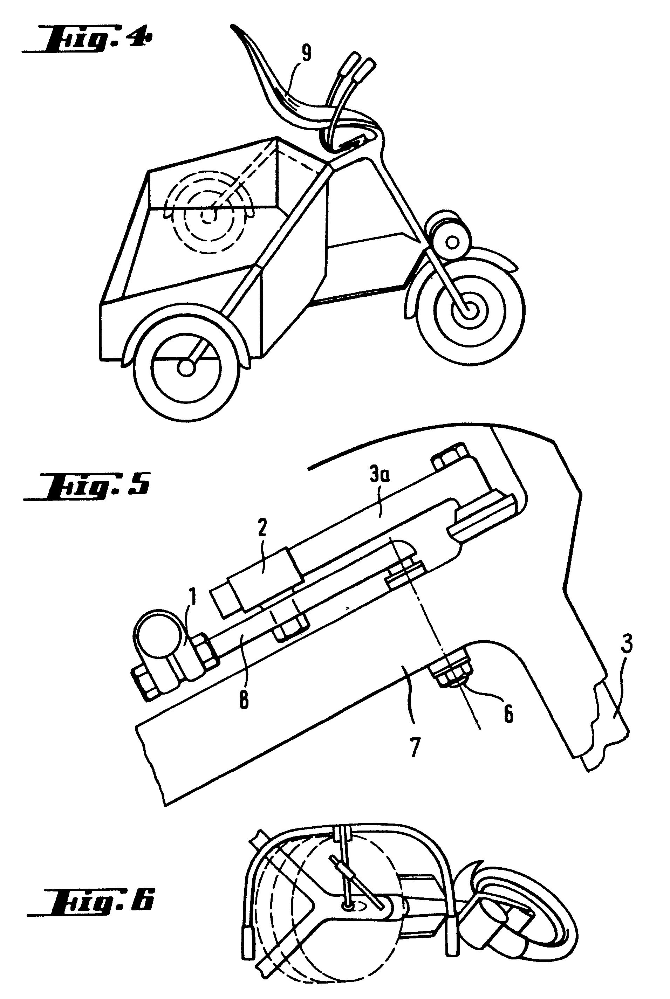

Fig. 4 zeigt ein Leichtfahrzeug mit Elektromotorantrieb auf dem Vorderrad.

Fig. 5 zeigt die Teile seiner Lenkung und die Verbindung der Sitzfläche mit dem vorderen Rahmenteil.

Fig. 6 zeigt die Funktion seiner Lenkung.

Das Dreirad besteht hauptsächlich aus einem (nach unten offenem) Rahmen dessen vorderem Teil 7 eine Steuersäule 3 mit der Gabel drehbar zugeordnet ist. Das Vorderrad ist als Antriebsrad der Gabel zugeordnet und die Hinterräder dem hinteren Rahmenteil. Im vorderem Rahmenteil 7 unter dem Sattel ist im Abstand von der Steuersäule 3 und parallel zu ihr eine Lenkachse 6 eingelagert, die einen Übertragungshebel 8 trägt, an dessen freiem Ende ein Lenker 1 befestigt ist, der schräg nach oben und vorne offen ist. Der Lenker 1 befindet sich mittels eines Verbindungsteiles 2 in Wirkverbindung mit Untersetzungsstange 3a, die starr mit der Steuersäule 3 verbunden ist. Der Sattel ist durch eine Befestigungsklemme 4 in Verbindung mit der Steuersäule 3 und mit der Gabel gesetzt.

Fast so wie das Dreirad ist auch das Leichtfahrzeug, das einen Motorantrieb auf dem Vorderrad aufweist (der selbstverständlich auch den Hinterrädern zugeordnet werden kann) zusammengesetzt, aber mit dem wesentlichen Unterschied, daß seine Sitzfläche in Verbindung mit dem vorderen Rahmenteil 7 steht. Sein Rahmen braucht nicht nach unten offen sein.

Bei dem Lenksystem der Erfindung kann man den Lenker um über 180° drehen, wobei die Gabel nur um 60° gedreht werden soll. Die Untersetzungswirkung ergibt sich aus dem unterschiedlichen Abstand des Verbindungsteiles 2 von der Lenkachse 6 und von der Steuersäule 3. Den Untersetzungsgrad kann man durch einen anderen Abstand des Verbindungsteiles (2) von der Lenkachse 6 (bzw. Abstand von der Lenkachse (6) bis zur Steuersäule (3)) verändern.

## Patentansprüche

1. Leichtfahrzeug mit mindestens einer Sitzfläche (10, 9) und zwei oder mehreren Rädern, dessen vorderem Rahmenteil (7) eine Steuersäule (3) nach hinten geneigt und drehbar zugeordnet ist, bei dem im Abstand von der Steuersäule (3) eine einen Übertragungshebel (8) tragende Lenkachse (6) drehbar gehalten ist, die mit der Steuersäule (3) unter Zwischenschaltung eines Untersetzungsgetriebes in Wirkverbindung steht, dadurch gekennzeichnet, daß die Lenkachse (6) im vorderen Rahmenteil (7) angeordnet ist, der unter der Sitzfläche (10, 9) liegt; daß durch eine drehbewegliche und gleitende Koppelung eines Verbindungsteiles (2) eine drehbeweglich zwangsläufige Wirkverbindung des Lenkers (1) mit der Untersetzungsstange (3a) mindestens über dem Übertragungshebel (8) hergestellt ist, und daß die Untersetzungsstange (3a) starr in Verbindung mit der Steuersäule (3) liegt.

2. Leichtfahrzeug nach Anspruch 1, dadurch gekennzeichnet, daß der an dem Übertragungshebel (8) befestigte Lenker (1) nach seinem Querauslauf nach links und rechts beidseitig zuerst nach oben gebogen ist, und schräg nach oben und vorne erstreckende Griffteile aufweist, dessen Lenkbewegung um den Fahrer oberhalb seiner Knie verläuft.

3. Leichtfahrzeug nach Anspruch 1 oder 2, dadurch gekennzeichnet, daß die Untersetzungsstange (3a) in einer Ebene geführt wird, die parallel zur Bewegungsebene des den Lenker (1) tragenden Übertragungshebels (8) verläuft.

4. Leichtfahrzeug nach Anspruch 1 oder 2 oder 3, dadurch gekennzeichnet, daß beim Pedalantrieb auf das Vorderrad wegen der Mitlenkung des Tretlagers auch der Sattel mitgelenkt wird.

5. Leichtfahrzeug nach mindestens einem Anspruch von 1 bis 4, dadurch gekennzeichnet, daß das vordere Rahmenteil (7) des pedalangetriebenen Fahrzeugs zusammen mit dem hinteren Rahmenteil und mit der Steuersäule (3) eine nach unten offene, etwa U-Form bilden, und daß das Tretlager an der Vorderradgabel außerhalb des Umfanges des Vorderrades und hinter dessen Achse angeordnet ist.

6. Leichtfahrzeug nach Anspruch 1 oder 2 oder 3, dadurch gekennzeichnet, daß die Sitzfläche (9) des motorangetriebenen Fahrzeugs eine Verbindung mit dem drehfesten vorderen Rahmenteil (7) aufweist und über der Lenkachse (6) nach hinten gezogen ist.

## Claims

1. Light vehicle with at least one saddle (10, 9) and two or more wheels, having a steering column (3), turnable and tilting rearwards, connected to the front part of the frame (7), whereby a turnable steering axle (6) having a transfer arm (8) attached to its top is set in place some little distance from the steering column (3). This steering axle (6) is operatively connected to the steering column (3) through an interposed step-down gearing arrangement and is distinguished by the fact that it is situated at the front part of the frame (7) which lies under the saddle (10, 9), that a sliding and turning connecting piece (2) joining the steering control (1) and the step-down gearing arm (3a) produces of necessity, at least through the transfer arm (8), a turning movement of the step-down gearing arm (3a), and that the step-down gearing arm (3a) is rigidly attached to the steering colum (3).

2. Light vehicle as in claim 1, distinguished by the fact that the steering control (1) attached to the transfer arm (8) takes the form of two arms which first project sideways left and right then bend upwards and forwards ending in two handgrips, the steering movement taking place above the rider's knees.

3. Light vehicle as in claim 1 or 2, distinguished by the fact that the step-down gearing arm (3a) is in a plane which runs parallel to the transfer arm (8) incorporating the steering control (1).

4. Light vehicle as in claim 1 or 2 or 3, distinguished by the fact that with front-wheel pedal drive the saddle also follows the steering direction because the pedal drive is »steered«.

5. Light vehicle as in at least one of the claims 1 to 4, distinguished by the fact that the front part of the frame (7) of the pedal-driven vehicle, together with the rear part of the frame and the steering column (3) form a rough, downward-pointing U shape, and that the pedals connected to the front wheel fork ar outside the circumference of the wheel and rearward of its axle.

6. Light vehicle as in claim 1 or 2 or 3, distinguished by the fact that the saddle (9) of the motor-driven vehicle is attached to the non-pivoting front part of the frame (7) and is shaped rearwards over the steering axle (6).

## Revendications

1. Véhicule léger sur deux ou plusieurs roues avec au moins une surface de siège (10, 9), dans la partie avant du cadre (7) du véhicule étant logée une colonne de commande (3), inclinée vers l'arrière et pivotante, et, à une certaine distance de cette colonne, une axe de direction (6) portant de façon pivotante un levier de transmission (8), l'axe de direction étant relié activement avec la colonne de commande (3) par insertion d'un démultiplicateur, caractérisé par le fait que l'axe de direction (6) est logé dans la partie avant (7) du cadre qui se trouve sous la surface de siège (10, 9); qu'une liaison active à accouplement rigide à mouvement pivotant du guidon (1) avec la tige de démultiplication (3a) est réalisée au moins au dessus du levier de transmission (8) par accouplement d'une pièce de raccord (2) à mouvement pivotant et coulissant et que la tige de démultiplication (3a) se trouve en liaison rigide avec la colonne de commande (3).

2. Véhicule léger selon revendication 1, caractérisé par le fait que le guidon (1) fixé sur le levier de transmission (8) est, après son développement transversal vers la gauche et vers la droite, cintré des deux côtés vers le haut et présente des poignées dirigées vers le haut l'avant, dont le mouvement de direction se développe autour du conducteur au dessus de ses genoux.

3. Véhicule léger selon revendication 1 ou 2, caractérisé par le fait que la tige de démultiplication (3a) est entraînée sur un plan parallèle au plan du mouvement du levier de transmission (8) portant le guidon (1).

4. Véhicule léger selon revendication 1 ou 2 ou 3, caractérisé par le fait que lors de propulsion par pédales de la roue avant, la selle suit également le mouvement de braquage, vu que le pédalier est lui aussi entraîné par la direction.

5. Véhicule léger selon au moins une des revendications 1 à 4, caractérisé par le fait que la partie avant (7) du cadre du véhicule propulsé par pédales forme avec la partie arrière du cadre et avec la colonne de commande (3) à peu près un U ouvert vers le bas et que le pédalier est logé sur la fourche de la roue avant à l'extérieur de la circonférence de la roue et derrière l'axe de celle-ci.

6. Véhicule léger selon revendication 1 ou 2 ou 3, caractérisé par le fait que la surface de siège (9) du véhicule actionné par moteur présente une liaison avec la partie avant (7) du cadre résistant à la torsion et se développe vers l'arrière par dessus l'axe de direction (6).

**Fig. 1**

**Fig. 2**

**Fig. 3**

**Fig. 4**

**9**

**Fig. 5**

**3a**

**2**

**1**

**8**

**7**

**6**

**3**

**Fig. 6**